# EUROPEAN PATENT APPLICATION

(11) **EP 4 830 808 A1**
(43) Date of publication of application: **28.10.2026**
(21) Application number: 24907567.2
(22) Date of filing: 23.12.2024
(51) Int. Cl.: B01D 17/04

(54) **COALESCER SYSTEM AND OIL WATER SEPARATOR**

(30) Priority: 22.12.2023 JP 2023216568
(71) Applicant: Kagoshima University, Kagoshima-shi, Kagoshima 890-8580 (JP)
(72) Inventor: MIZUTA, Kei, Kagoshima-shi, Kagoshima 890-8580 (JP); NII, Susumu, Kagoshima-shi, Kagoshima 890-8580 (JP)
(74) Representative: Stöckeler, Ferdinand
(86) International application number: PCT/JP2024/045403
(87) International publication number: WO 2025/135185

(57) **Abstract**

To prevent generation of a detour flow of treatment target liquid and temporal deterioration of the degree of oil water separation due to deterioration of a peripheral portion of a coalescer for oil water separation. Pressure is applied only to a peripheral portion of a coalescer 2 in contact with the inner wall of a storage container 11 in an oil water separation tank 1, and the pressure in the peripheral portion is maintained higher than that in a center portion. In order to form a pressure gradient, a recess 31 parallel to a flow path direction is provided in the bottom surface of a porosity difference generation unit 3, and pressing portions 32 are disposed on both sides of the recess 31. As a result, the treatment target liquid bypasses the deteriorated peripheral portion and selectively flows only in the center portion with less deterioration, and therefore, deterioration of oil water separation performance is reduced.

## Description

### TECHNICAL FIELD

The present invention relates to a coalescer system used for wastewater treatment or the like and an oil water separator including the coalescer system.

### BACKGROUND ART

A conventional coalescer used for wastewater treatment or the like includes a filling layer made of resin fibers or the like, and is installed in a flow path through which treatment target liquid flows to capture oil droplets in the treatment target liquid and agglomerate and coarsen the oil droplets. The coarsened oil droplets easily float and are separated from the coalescer. As a result, oil and water are separated.

However, the oil droplets captured and aggregated in the filling layer increase a pressure loss during the flow of the treatment target liquid. As a result, driving energy required for flowing the treatment target liquid increases.

When the oil droplets are captured and aggregated in the filling layer, the oil droplets may not collide with a filler and may flow out while bypassing voids at a low flow velocity. In this case, the oil droplets are discharged to the outside of the system without being coarsened, and the coalescer does not fulfill its function. Therefore, in order to achieve highly accurate separation by the coalescer using the related technique, it is necessary to employ a technique of increasing the flow velocity and causing the oil droplets to collide with the filler using an inertial effect in order to reduce the bypassing of the oil droplets, and accordingly, the pressure loss in the flow increases and the energy required for driving increases.

For these reasons, in order to solve the above problems, Patent Literature 1 proposes a coalescer including an assembly of sheet-like metal meshes, in which a direction along which the surface of the metal mesh is formed is in the same direction as a flow direction of treatment target liquid.

That is, according to the invention of Patent Literature 1, oil droplets in the treatment target liquid are quickly coalesced and coarsened without being aggregated by an oil film formed along the layer of the metal mesh extending in the flow direction of the treatment target liquid. Therefore, the pressure loss can be reduced, and the driving energy for the flow is also saved. In addition, since the oil droplets move as the oil film and are not aggregated, clogging can be reduced and a maintenance burden can be greatly reduced as a result of avoiding blockage.

### CITATION LIST

### PATENT LITERATURE

Patent Literature 1: JP-A-2021-602

### SUMMARY OF INVENTION

### PROBLEMS TO BE SOLVED BY INVENTION

However, the diameter of the oil droplets targeted by the present invention is on the order of micrometers. Therefore, in order to capture the oil droplets without gaps, the mesh needs to have high dimensional accuracy on the order of nanometers and dimensional stability that maintains the accuracy. However, due to the flexible structure of the mesh, it is difficult to simultaneously achieve and maintain such high dimensional accuracy and dimensional stability, and there is a problem that this is not suitable for industrial production processes. Furthermore, high pressure is continuously applied to a side wall portion of the mesh filled portion, and "settling" occurs, in which a packing is deformed over time. There is also a problem that a gap is generated due to such deformation, and as a result, a detour flow may occur, which causes temporal reduction in the degree of oil water separation.

Further, in Patent Literature 1, since the entire mesh layer is uniformly pressed from above the mesh layer, a flow toward the peripheral portion is generated. Therefore, when there is a gap in the mesh side portion, the treatment target liquid flows into such a portion, thereby generating a flow that does not pass through the mesh layer. As a result, the oil droplets contained in the treatment target liquid are not coarsened, leading to reduction in the degree of separation. On the other hand, in the present invention, by creating a situation where the porosity in the peripheral portion of the mesh layer is lower than that of the center portion, the flow resistance in the center portion becomes smaller than that in the peripheral portion, and the flow toward the peripheral portion is reduced. That is, the present invention has been made to cope with the problems described above, and an object of the present invention is to effectively prevent temporal reduction in the degree of oil water separation while a mechanism is simple by preventing a detour flow from a gap, which is likely to occur particularly in a side wall portion of a mesh filled portion.

### SOLUTION TO PROBLEMS

In order to achieve the object, a coalescer system of the present invention includes a coalescer in which sheet-like meshes installed in a flow path through which treatment target liquid passes are laminated, and a porosity difference generation unit that generates a difference in porosity of the flow path in a direction orthogonal to the flow path in a surface of a mesh layer of the coalescer. The porosity of the flow path in a peripheral portion of the coalescer is lower than the porosity of the flow path in a center portion.

The porosity difference generation unit is a piston-like pressing member that presses the coalescer in a direction perpendicular to a surface formed by the mesh, and a recess is formed along a flow path direction in a center portion of the lower surface of the pressing member.

The piston-like pressing member has the porosity of the flow path, which gradually decreases from the center portion toward both ends of the flow path.

Both sides of the recess of the piston-like pressing member have a slant shape.

The porosity difference generation unit is formed of an elastic body, and an elastic body thickness in the peripheral portion is larger than an elastic body thickness in the center portion.

The coalescer is an assembly in which sheet-like resin or metal mesh-like members are laminated.

The mesh-like member has a warp wire and a weft wire crossing the warp wire.

The sheet-like coalescer is an assembly in which resin or metal mesh-like members are laminated, and the mesh-like member has a warp wire and a weft wire crossing the warp wire.

The porosity difference generation unit has a sponge structure in a portion around the flow path.

An oil water separator according to this invention includes a treatment target liquid supply tank, a pump, an oil water separation tank, and a treatment liquid recovery tank, and the oil water separation tank is provided with any of the coalescer systems described above.

### EFFECTS OF INVENTION

That is, the coalescer system according to the present invention includes the assembly formed by laminating the sheet-like meshes installed in the flow path through which the treatment target liquid passes, in which the direction in which the mesh surface of the assembly is formed is in the same direction as the flow direction of the treatment target liquid, and the pressurization means that pressurizes the assembly in the direction perpendicular to the mesh surface, so that high pressure can be generated in the peripheral portion along the flow path of the coalescer and flow resistance in the peripheral portion can be increased as compared with the center portion. In addition, the porosity difference generation unit includes the pressurization portion at an opposing outer peripheral portion of the assembly from the direction orthogonal to the mesh surface of the assembly, and the pressurization portion is parallel to the flow direction of the treatment target liquid and the treatment target liquid inflow and outflow sides are opened. As a result, the treatment target liquid selectively flows in the center portion, and an effect of preventing occurrence of the detour flow is obtained.

The piston-like pressing member that presses the coalescer is used for the porosity difference generation unit, and the contact pressure between the pressing member and the coalescer can be locally adjusted by the recess provided along the flow path in the center portion of the lower surface of the pressing member. Furthermore, the slant shape of the pressing member makes it possible to increase the pressure gradient stepwise from the peripheral portion toward both end portions of the coalescer.

Since the pressing member is formed of the elastic body, the deformation amount of the peripheral portion is larger than that of the center portion, and stronger pressing force can be applied to the peripheral portion. Furthermore, the adoption of the sponge structure enables fine deformation as compared with the mesh opening size, and the sponge structure enters the opening of the mesh to reduce the porosity in such a portion, thereby contributing to prevention of the detour flow. The sheet-like coalescer includes the mesh-like member made of resin or metal having high affinity with oil, and the laminated mesh-like members include the warp wire and the weft wire that effectively guide oil droplets to an oil film.

Further, the oil water separator includes the treatment target liquid supply tank, the pump, the container of the oil water separation tank, and the treatment liquid recovery tank. The coalescer system described above is incorporated in the oil water separation tank, and simple and highly efficient oil water separation is achieved as a whole.

### BRIEF DESCRIPTION OF DRAWINGS

Fig. 1 is a configuration diagram illustrating an overall configuration of an oil water separator.
Fig. 2 is a sectional view illustrating the configuration of a coalescer system.
Fig. 3 is a schematic view of a treatment target liquid flow path when viewed from above the coalescer system.
Fig. 4 is a front view of a prototype example of a porosity difference generation unit of the coalescer system.
Fig. 5 is a measurement graph illustrating a relationship between a pressure difference and the degree of oil water separation by the coalescer system.
Fig. 6 is a sectional view illustrating the configuration of a coalescer system.
Fig. 7 is a schematic view of a treatment target liquid flow path when viewed from above the coalescer system.
Fig. 8 is a bottom view of one prototype example of a porosity difference generation unit of the coalescer system.
Fig. 9 is a top view of one prototype example of the porosity difference generation unit of the coalescer system.
Fig. 10 is a measurement graph illustrating a relationship between a pressure difference and the degree of oil water separation by the coalescer system.
Fig. 11 is a plan view and a sectional view of a sheet-like mesh used in the coalescer system.
Fig. 12 is a plan view illustrating a state in which oil adheres to the sheet-like mesh used in the coalescer system.
Fig. 13 is a perspective view illustrating a state in which treatment liquid flows into a coalescer formed by laminating sheet-like meshes.
Fig. 14 is a top view and a bottom view illustrating an example of operation of the coalescer system.

### DESCRIPTION OF EMBODIMENT

### Embodiment 1

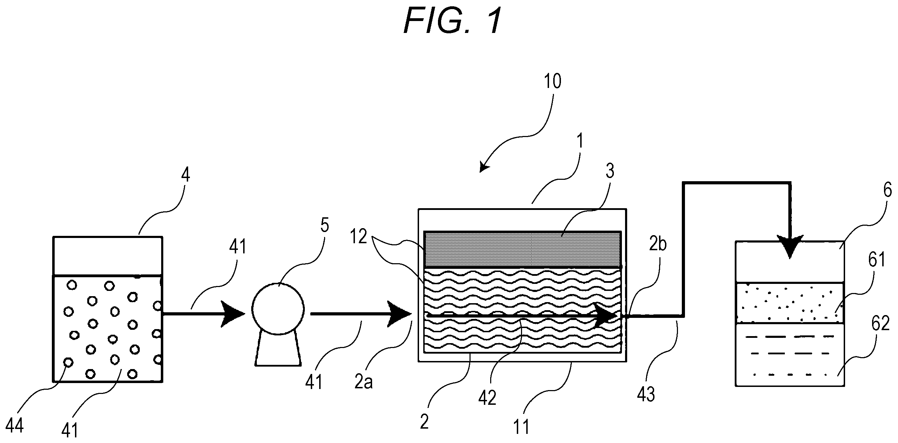

An oil water separator 10 of this invention illustrated in Fig. 1 includes a coalescer system 12 having a coalescer 2 configured such that mesh-like sheets are laminated in an oil water separation tank 1 and a porosity difference generation unit 3 that locally presses the coalescer 2 to generate a pressure gradient. Further, the oil water separation tank 1 includes a storage container 11 functioning as a container for the oil water separation tank 1.

Reference numeral 4 denotes a supply tank for supplying treatment target liquid 41 containing oil 61, and the treatment target liquid 41 is produced as wastewater in an oil plant, a food plant, or the like. Note that oil droplets 44 schematically indicate the oil 61 contained in the liquid. A pump 5 supplies this treatment target liquid 41 to the oil water separation tank 1.

The treatment target liquid 41 supplied by the pump 5 is subjected to treatment in the oil water separation tank 1, then separated into the oil 61 and moisture 62, and stored in a recovery tank 6.

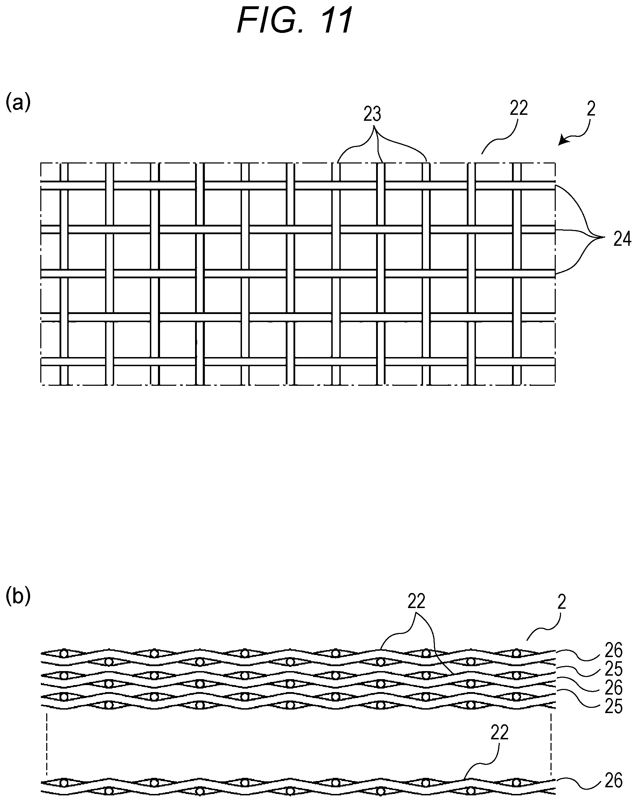

Here, the structure and function of the coalescer 2 will be described. As illustrated in a plan view of Fig. 11(a), the coalescer 2 is formed by laminating sheet-like meshes 22, each of which has warp wires 23 and weft wires 24 crossing the warp wires 23, and these meshes 22 with a plain weave structure are disposed orthogonally. In addition, as illustrated in a side view of Fig. 11(b), the coalescer 2 includes a mesh 22 having interlayer portions 25 alternately disposed with mesh layers 26.

As the material of the mesh 22, metal such as stainless steel can be used, but a resin material having affinity with the oil 61, particularly polypropylene (PP) and polyethylene (PE), which are excellent in adsorption of the oil 61, is also suitable. Furthermore, a material subjected to physical/chemical treatment that facilitates adsorption of the oil 61 is also suitable by applying a lipophilic coating agent such as silicon-based or fluorine-based polymer.

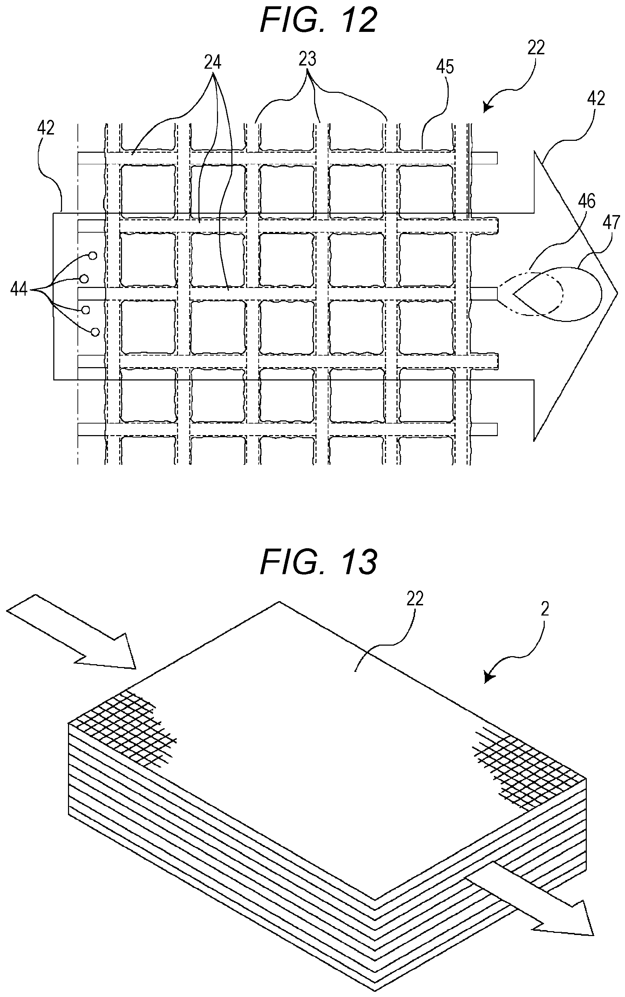

Fig. 13 is a perspective view of the coalescer 2. The coalescer 2 is formed by laminating and assembling the meshes 22. The outer shape of the coalescer 2 is adapted to a flow path 42 of the storage container 11 in the oil water separation tank 1, and is appropriately formed according to the sectional shape of the flow path. The coalescer 2 illustrated in Fig. 13 has a rectangular parallelepiped shape, and includes the plurality of meshes 22. These meshes 22 are laminated and assembled in one direction. A white arrow in the figure indicates a direction in which the treatment target liquid 41 flows.

In the flow path 42 from an inlet surface 2a to an outlet surface 2b of the coalescer 2 in Fig. 1, the fine oil droplets 44 in the treatment target liquid 41 are in contact with an oil film 45 formed on the surfaces of the warp wires 23 and the weft wires 24 as schematically illustrated in Fig. 12. The oil film 45 moves mainly along the warp wires 23 and the weft wires 24 extending in the flow direction along with the flow of the treatment target liquid 41, and the subsequent oil droplets 44 contact and coalesce with the oil film 45. The weft wire 24 also captures the oil droplets 44 not in contact with the warp wire 23, and changes these oil droplets 44 into the oil film 45 to promote coalescence.

Next, the oil film 45 formed by coalescing the oil droplets 44 moves downstream through the mesh layers 26 and the interlayer portions 25. The oil film 45 coarsened at the lower end of the mesh layer 26 further grows into a coarse liquid droplet 46 at end portions of the warp wires 23 and the weft wires 24 forming the outlet surface 2b. The coarse liquid droplet 46 grows until such a droplet cannot resist the flow of the treatment target liquid 41, and then is separated from the coalescer 2 as a coarse liquid droplet particle 47.

The coarse liquid droplet particle 47 having flowed out of the oil water separation tank 1 is easily separated from water and floats in the recovery tank 6. As a result, in the recovery tank 6, a layer of the oil 61 is formed in an upper layer, and a layer of the moisture 62 remains in a lower layer.

However, as a result of long-term operation of the oil water separator 10, pressure is always applied to a portion of the coalescer 2 in contact with the storage container 11, and the mesh 22 may be deformed due to "settling" or the like due to aged deterioration of a packing. When such deformation occurs, a detour flow occurs, and the degree of oil water separation is significantly reduced. As a result, treatment liquid is sent to the recovery tank 6 in a state in which the oil 61 is not sufficiently removed, and the performance of the oil water separation device is deteriorated.

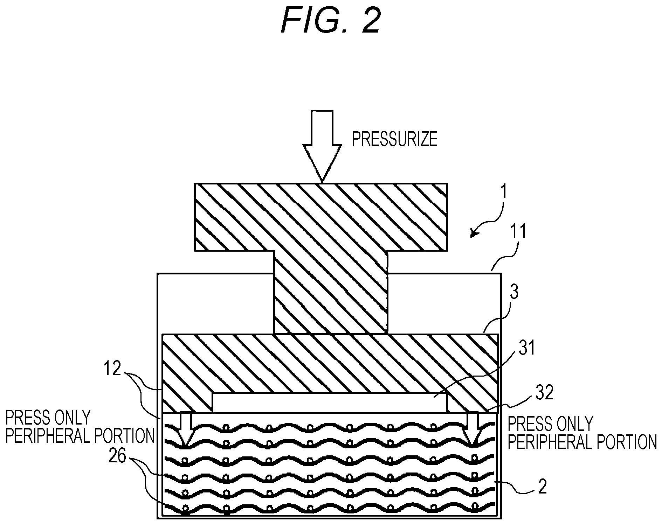

In order to improve such a situation, the coalescer system 12 according to the present invention is provided. Fig. 2 is a schematic sectional view of such a system when viewed from the front. As illustrated in Fig. 2, the porosity difference generation unit 3 is a piston-like device that presses part of the coalescer 2 to generate the pressure gradient. In this embodiment, only both end portions of the coalescer 2, that is, a peripheral portion 21 in contact with the inner wall of the storage container 11, are pressed, and the pressure at such a portion is set higher than that of a center portion. A bottom portion of the porosity difference generation unit 3 is provided with a recess 31 along the flow path direction, and pressing portions 32 on protrusions are formed on both sides of the recess 31.

When pressure indicated by a white arrow in Fig. 2 is applied to an upper portion of the porosity difference generation unit 3, such pressure is applied as a stepwise pressure gradient to the peripheral portion 21 of the coalescer 2 through the pressing portions 32, and the pressure gradient causes deformation of the mesh layer 26 in the vertical direction at the peripheral portion 21 of the coalescer 2. Such deformation increases a pressure loss ΔPfp in the inflow treatment target liquid 41, and the flow resistance of such a portion increases.

As a result, the treatment target liquid 41 flowing into the coalescer 2 selectively flows through the center portion having relatively low flow resistance while avoiding the peripheral portion 21 having high flow resistance. This makes it possible to prevent deterioration of the oil water separation performance of the entire device because the treatment target liquid 41 does not pass through the peripheral portion 21 of the coalescer 2 whose oil water separation capability has been deteriorated and selectively passes only through the center portion with less deterioration.

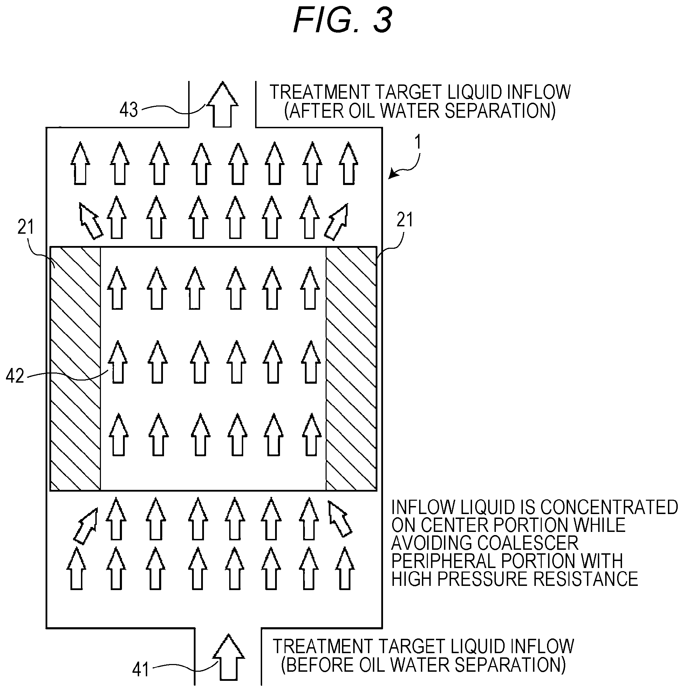

Fig. 3 is a view schematically illustrating the flow path of the treatment target liquid 41 when viewed from above the coalescer 2. In Fig. 3, the treatment target liquid 41 having flowed into the oil water separation tank 1 from below is concentrated on the center portion while avoiding the peripheral portion 21 of the coalescer 2 having high flow resistance, according to the flow path indicated by the white arrows. In this manner, the treatment target liquid 41 having flowed out of the oil water separation tank 1 has been efficiently oil-water separated and has passed only through the center portion of the coalescer 2, and a high oil water separation efficiency is achieved.

As the material of the porosity difference generation unit 3, an elastic body such as rubber or elastomer may be used. In the case of using the elastic body, even if the center portion of the coalescer 2 to be pressed is deformed, the deformation amount of the peripheral portion 21 becomes relatively large, so that the flow resistance of the peripheral portion 21 can be increased and the flow path can be formed in the center portion.

The pressure increase due to pressing in the coalescer 2 is caused by reduction in a vertical porosity between the internal meshes. Here, the pressure loss ΔPfc in the center portion of the coalescer 2 needs to be smaller than the pressure loss ΔPfp in the peripheral portion 21 and to satisfy Equation 1 below. As a result, the relationship between ΔPfp and ΔPfc follows Equation 2. [Equation 1] $Δ {p}_{fc} < Δ {p}_{fp} - Δ {p}_{fc}$ [Equation 2] $Δ {p}_{fc} < \frac{Δ {p}_{fp}}{2}$

The relationship between the porosity of the flow path and the flow resistance can be estimated by Equation 3 below regarding a pressure loss ΔPf in a fiber filled layer. [Equation 3] $Δ {p}_{f} = {C}_{De} \frac{2 {ρu}^{2} L \left(1-ε\right)}{{πg}_{c} {D}_{f}}$

Here, L [m] represents the flow path length of the element, ρ [kg/m3] represents the density of the fluid, µ [m/s] represents the flow velocity, ε [-] represents the porosity, gc [kg/m/s2] represents the gravitational acceleration, Df [m] represents the fiber diameter, and C_{De} [-] represents the effective resistance coefficient. Various correlation equations have been proposed for C_{De}, and Equation 4 below is disclosed as an example thereof. In Equation 4, N_{Re} [-] is a Reynolds number based on the substantial flow velocity and fiber diameter in the fiber filled layer. [Equation 4] ${C}_{De} = 0.6 + \frac{4.7}{\sqrt{{N}_{Re}}} + \frac{11}{{N}_{Re}}$

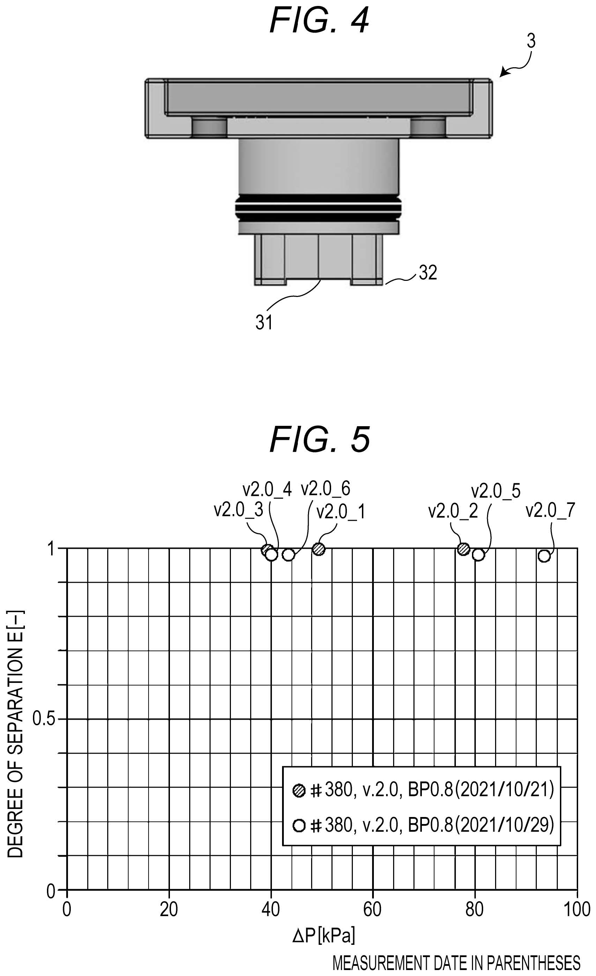

Fig. 4 is a front view of the porosity difference generation unit 3 experimentally produced for the purpose of measuring the relationship between the pressure and the rate of oil water separation. The recess 31 in the center portion located at a lower end portion of the porosity difference generation unit 3 and the pressing portions 32 in the peripheral portion 21 are provided.

Fig. 5 shows results of an oil water separation experiment performed using the prototype coalescer system 12. In this experiment, the relationship between the pressure difference ΔP [kPa] between the peripheral portion 21 and the center portion of the coalescer 2 and the degree of oil water separation E [-] (1 means 100% success of separation) was measured. As is apparent from the results of Fig. 5, by maintaining the pressure difference ΔP between the peripheral portion 21 and the center portion of the coalescer 2 at 40 kPa or more, a degree of separation of 99% or more was maintained even after about 1 week from the start of the experiment. As a result, it is possible to confirm an effect of preventing reduction in the degree of oil water separation due to deterioration of the peripheral portion 21 of the coalescer 2.

### Embodiment 2

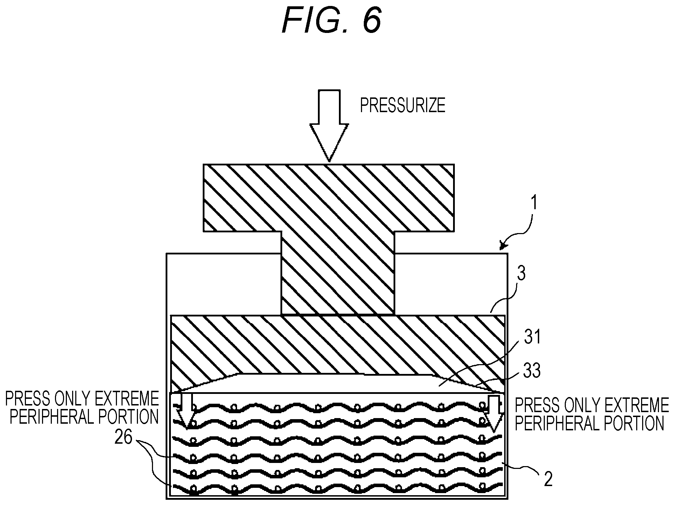

Fig. 6 is a schematic sectional view of a coalescer system 12 according to another embodiment of the present invention when viewed from the front. A difference from Fig. 2 is that surfaces on both sides of a recess 31 provided in a bottom portion of a porosity difference generation unit 3 are inclined (slanted) toward end portions. In Fig. 6, the recess 31 parallel to the flow path direction is provided in a center portion of the bottom surface of the porosity difference generation unit 3, and slant-like pressing portions 33 inclined toward both end portions are formed on both sides of the recess 31.

When pressure indicated by a white arrow in Fig. 6 is applied to an upper portion of the porosity difference generation unit 3, the pressure increases toward both end portions of a coalescer 2 by the slant-like pressing portions 33, and the flow resistance of such a portion can be increased. In this system, only the end portions of the coalescer 2 are initially pressed. The inflow of treatment target liquid 41 is avoided, and even in a peripheral portion 21 of the coalescer 2, a certain level of inflow is allowed in a portion close to the center portion.

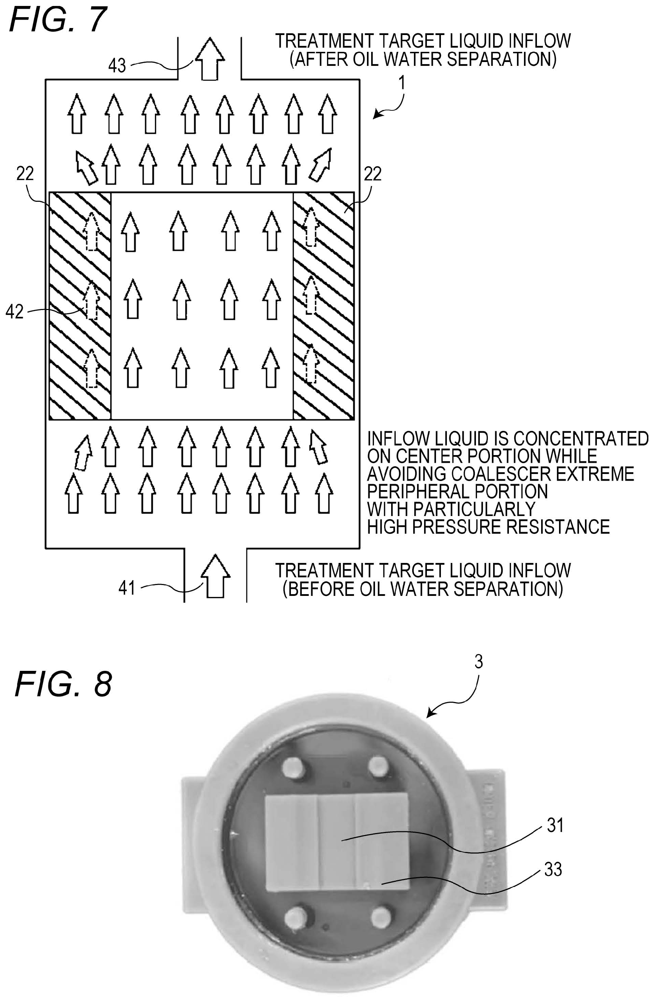

Fig. 7 is a schematic view illustrating the flow path of the treatment target liquid 41 when viewed from above the coalescer 2 of the embodiment above. As illustrated in Fig. 7, the treatment target liquid 41 having flowed into an oil water separation tank 1 does not flow into both end portions of the coalescer 2 but flows into the center portion because the pressed portion has the slant shape. However, it is illustrated that part of the treatment target liquid 41 also flows into the lower portion of the slant portion.

As a result, the treatment target liquid 41 does not need to pass through the end portions of the coalescer 2 where oil water separation efficiency has been lowered, but flows into the peripheral portion 21 close to the center portion which is not deteriorated. Therefore, it is possible to perform effective oil water separation while avoiding reduction in a treatment amount.

Furthermore, by using an elastically deformable resin material such as elastomer for the porosity difference generation unit 3, the pressing force can be changed stepwise from the end portion to the center portion, and the flow path of the treatment target liquid 41 can be controlled according to the deteriorated region of the end portion of the coalescer 2. In addition, the accuracy of the porosity difference generation unit 3 is sufficient on the order of millimeters instead of the order of nanometers with respect to the arrangement accuracy of the coalescer 2, and this has an advantage that pressing control to the coalescer 2 can be easily performed.

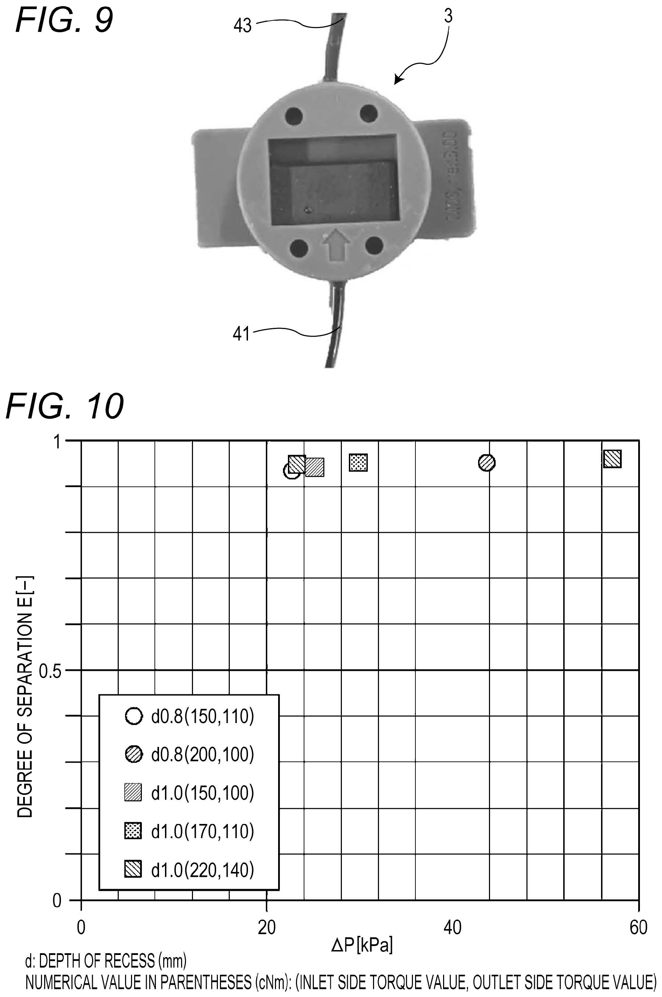

Fig. 8 is a bottom view of a prototype of the porosity difference generation unit 3 made of elastomer, which has the slant-like pressing portions 33 on both sides of the recess 31 as described above. Fig. 9 is a top view of the above-described prototype.

Fig. 10 shows results of an oil water separation experiment performed using such a prototype. In this experiment, the relationship between the pressure difference ΔP [kPa] and the degree of oil water separation E [-] (1 means 100% success of separation) was measured while changing the depth d (mm) of the recess 31 and the difference in pressing pressure between the center portion and the peripheral portion 21 (screw tightening torque values [cNm] on the inlet side and the outlet side: numerical value in parentheses in the figure), which are numerical values shown in the symbol legend in the figure. As illustrated in Fig. 10, it has been confirmed that by maintaining the pressure difference ΔP between the peripheral portion 21 and the center portion of the coalescer 2 at 20 kPa or more, a high degree of separation of 93.4 to 96.0% (average 94.6%) is achieved and high separation efficiency can be achieved without requiring dimensional accuracy on the order of nanometers.

Note that as the material of the porosity difference generation unit 3, a sponge-like member exhibiting larger elastic deformation may be used. In this case, by disposing the sponge-like member so as to enter the mesh opening, it is possible to prevent a detour flow by reducing the porosity in such a portion.

Furthermore, the sponge-like member may be disposed so as to overlap the mesh layer in the peripheral portion. In this case, the entirety of the disposed sponge and mesh is pressurized by a pressurization portion from above, so that the sponge is deformed so as to enter the opening of the mesh. With this configuration, the pressure loss at the time of flowing through a corresponding portion and a communication depth portion of the mesh satisfies Equation 1 (pressure loss reference value). As a result, the treatment target liquid selectively passes through the center portion where the mesh is disposed, oil droplets contained in the treatment target liquid are coarsened, and a high degree of separation is achieved.

Note that as a method for reducing the porosity in the peripheral portion as compared with the center portion, there are a method of applying larger force to the peripheral portion than the center portion when pushing the mesh layer, and a method of disposing, in the peripheral portion, a member that enters the opening of the mesh by deformation and reduces the porosity, such as a sponge. In the present invention, it has been confirmed that even when there is a gap in a side portion of the mesh layer, the treatment target liquid hardly flows into such a portion, and the oil droplets in the treatment target liquid are coarsened by selectively passing through the mesh filled portion, and high separation performance is exhibited. In fact, despite the presence of gaps in the side portions of the mesh filled portion of the coalescer illustrated in Fig. 9, high separation performance is achieved as illustrated in Fig. 10. This shows that the configuration of the present invention is effective in reducing the flow of the treatment target liquid to the peripheral portion.

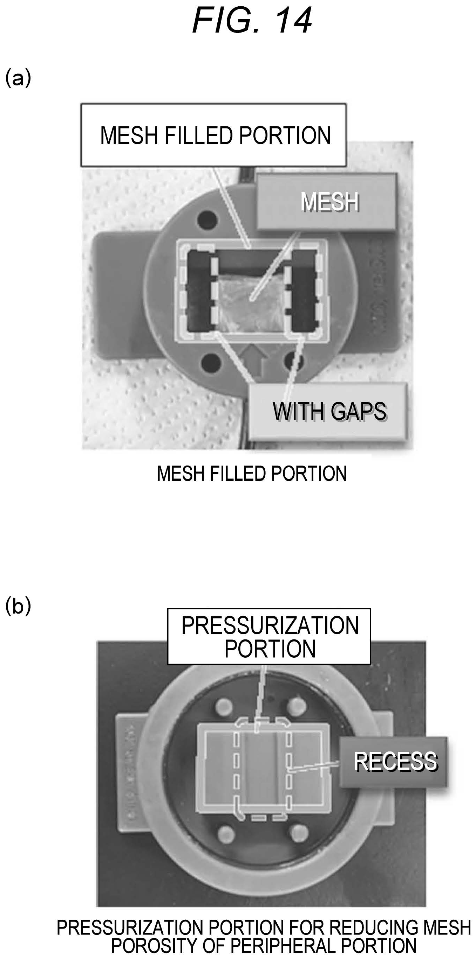

That is, as illustrated in Fig. 14(a), the mesh layer is disposed in contact with the inner wall on the inlet side, and further, as illustrated in Fig. 14(b), the mesh layer is pressurized from above. As a result, a void in such a portion becomes very small. With this configuration, the pressure loss at the time of passing through the corresponding portion is much higher than that when flowing through the mesh layer in the flow path direction. Therefore, the inflow of the treatment target liquid into the corresponding portion is effectively reduced.

### LIST OF REFERENCE SIGNS

- 1: Oil water separation tank
- 10: Oil water separator
- 11: Storage container
- 12: Coalescer system
- 2: Coalescer
- 22: Mesh
- 23: Warp wire
- 24: Weft wire
- 25: Interlayer portion
- 26: Mesh layer
- 3: Porosity difference generation unit
- 31: Recess
- 32: Pressing portion
- 33: Slant-like pressing portion
- 4: Supply tank
- 41: Treatment target liquid
- 44: Oil droplet
- 45: Oil film
- 46: Coarse liquid droplet
- 47: Coarse liquid droplet particle
- 5: Pump
- 6: Recovery tank
- 61: Oil
- 62: Moisture

## Claims

1. A coalescer system comprising: a coalescer in which sheet-like meshes installed in a flow path through which treatment target liquid passes are laminated; and a porosity difference generation unit that generates a difference in porosity of the flow path in a direction orthogonal to the flow path in a surface of a mesh layer of the coalescer, wherein a porosity of the flow path in a peripheral portion of the coalescer is lower than a porosity of the flow path in a center portion.

2. The coalescer system according to claim 1, wherein the porosity difference generation unit is a piston-like pressing member that presses the coalescer in a direction perpendicular to a surface formed by the mesh, and a recess is formed along a flow path direction in a center portion of a lower surface of the pressing member.

3. The coalescer system according to claim 2, wherein the piston-like pressing member gradually decreases in the porosity of the flow path from the center portion toward both ends of the flow path.

4. The coalescer system according to claim 3, wherein both sides of the recess of the piston-like pressing member have a slant shape.

5. The coalescer system according to claim 2, wherein the porosity difference generation unit is formed of an elastic body, and an elastic body thickness in the peripheral portion is larger than an elastic body thickness in the center portion.

6. The coalescer system according to any one of claims 1 to 5, wherein the coalescer is an assembly in which sheet-like resin or metal mesh-like members are laminated.

7. The coalescer system according to claim 6, wherein
the mesh-like member has a warp wire and a weft wire crossing the warp wire.

8. The coalescer system according to claim 7, wherein the porosity difference generation unit has a sponge structure in a portion around the flow path.

9. An oil water separator comprising: a treatment target liquid supply tank; a pump; an oil water separation tank; and a treatment target liquid recovery tank, wherein the oil water separation layer is provided with the coalescer system according to any one of claims 1 to 5.
